(19) Europäisches Patentamt
European Patent Office
Office européen des brevets

(11) Veröffentlichungsnummer : **0 135 470**
**B1**

(12) # EUROPÄISCHE PATENTSCHRIFT

(45) Veröffentlichungstag der Patentschrift : **08.07.87**

(51) Int. Cl.⁴ : **C 08 G 63/68**, C 08 G 63/34

(21) Anmeldenummer : **84810327.1**

(22) Anmeldetag : **02.07.84**

(54) **Verfahren zur Herstellung von Polyestern aus aliphatischen Dicarbonsäuren und Polyalkylpiperidyldiolen.**

(30) Priorität : **08.07.83 CH 3765/83**

(43) Veröffentlichungstag der Anmeldung : **27.03.85 Patentblatt 85/13**

(45) Bekanntmachung des Hinweises auf die Patenterteilung : **08.07.87 Patentblatt 87/28**

(84) Benannte Vertragsstaaten : **DE FR GB IT**

(56) Entgegenhaltungen :
**FR-A- 2 351 144**
**US-A- 4 265 805**

(73) Patentinhaber : **CIBA-GEIGY AG**
**Klybeckstrasse 141**
**CH-4002 Basel (CH)**

(72) Erfinder : **Troxler, Eduard, Dr.**
**St. Albanring 220**
**CH-4052 Basel (CH)**
Erfinder : **Kainmüller, Thomas, Dr.**
**Am Kümmelberg 1**
**D-6145 Lindenfels/Odenwald (DE)**
Erfinder : **Maul, Rudolf, Dr.**
**Chrodegangstrasse 6a**
**D-6143 Lorsch/Hessen (DE)**

**EP 0 135 470 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein neues Verfahren zur Herstellung von Polyestern aus aliphatischen Dicarbonsäuren und Polyalkylpiperidyldiolen durch Umsetzung eines entsprechenden Diols mit einem Ueberschuss eines aliphatischen Dicarbonsäureesters in der Schmelze in Gegenwart von kleinen Mengen eines geeigneten Katalysators.

Die Herstellung eines Polysuccinats von 1-(2-Hydroxyethyl-2,2,6,6-tetramethyl-4-hydroxypiperidin ist bereits aus der DE-OS 27 19 131 (& FR-A-2 351 144) (Beispiel 1) bekannt. Gemäss der dort beschriebenen Methode wird die Reaktion in Xylol in Gegenwart von mindestens 7 Mol-% Katalysator bezogen auf die Piperidinverbindung bei 100 bis 145 °C, unter Abdestillieren des entstehenden Methanols durchgeführt. Dabei entsteht bei einer Endkonzentration des Produktes in der Reaktionslösung von ca. 65 Gew.-% ein Polysuccinat mit einem durchschnittlichen Molgewicht $\bar{M}n$ von maximal 4 000. Das erhaltene gelbliche Produkt genügt hinsichtlich der Farbe nicht ganz den heutigen Erfordernissen der Technik.

Es ist nun gefunden worden, dass beim Durchführen der Reaktion in der Schmelze mit einem Ueberschuss an Dicarbonsäureester und bei Verwendung eines geeigneten Katalysators in bedeutend kleineren Mengen, überraschenderweise in praktisch quantitativer Ausbeute Polyester des obengenannten Typs mit einstellbarem durchschnittlichen Molekulargewicht $\bar{M}n$ von ca. 2 500 bis ca. 7 000 erhalten werden können, die bezüglich der Farbe einwandfrei sind. Ein weiterer Vorteil des erfindungsgemässen Verfahrens liegt darin, dass keine Lösungsmittel verwendet werden. Abgesehen von der signifikanten Reduktion der Abwasser-Last, bedeutet dies auch das Entfallen des bei Polymeren bekanntlich schwierigen Entfernens von störenden Lösungsmittelresten.

Die nach dem erfindungsgemässen Verfahren erhältlichen Polyester sind allgemein als wertvolle Stabilisatoren für organische Materialien bekannt.

Die vorliegende Erfindung betrifft demnach ein Verfahren zur Herstellung von Verbindungen der Formel I

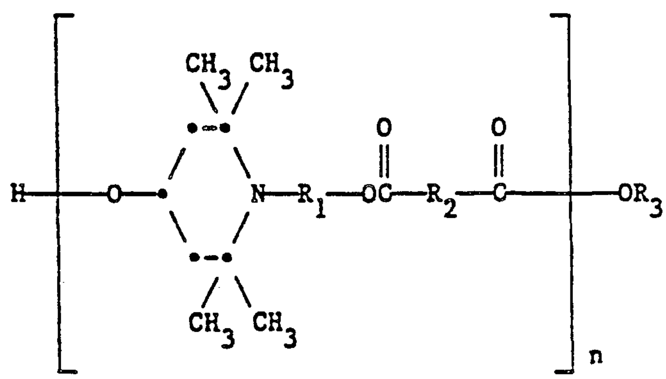

(I)

worin n eine Zahl zwischen 8 und 25, bevorzugt zwischen 10 und 20 bedeutet, $R_1$ und $R_2$ unabhängig voneinander $C_1$-$C_{18}$-Alkylen, durch —O—, —S— oder —N(R)— unterbrochenes $C_2$-$C_{18}$-Alkylen, wobei R Wasserstoff oder $C_1$-$C_4$-Alkyl bedeutet, $C_4$-$C_8$-Alkenylen sind und $R_3$ $C_1$-$C_4$-Alkyl bedeutet, durch Polykondensation eines Diols der Formel II

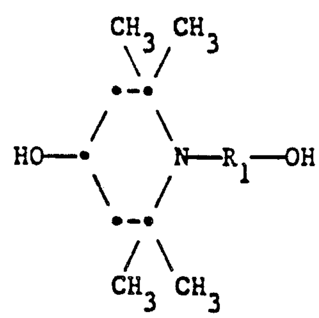

(II)

mit einem Dicarbonsäureester der Formel III

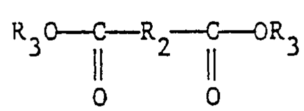

(III)

dadurch gekennzeichnet, dass man die Schmelze, in welcher der Dicarbonsäureester der Formel III in

einem Ueberschuss von 2 bis 50 Mol-%, bevorzugt 5 bis 20 Mol-%, bezogen auf das Diol der Formel II enthalten ist, in Gegenwart von mindestens 0,03 Mol-%, ebenfalls bezogen auf das Diol der Formel II, eines Oxids oder einer metallorganischen Verbindung eines Metalls der vierten Haupt- oder der vierten Nebengruppe des Periodensystems, solange bis der grösste Teil, bevorzugt 70 bis 80 % des sich bildenden Alkanols der Formel $R_3OH$ abdestilliert ist bei einem Druck von 0,7 bis 1,3, bevorzugt 0,9 bis 1,1 bar und danach bevorzugt während 2 bis 8, insbesondere 2 1/2 bis 4 Stunden bei weniger als 10 mbar, bevorzugt weniger als 5 mbar, bei Temperaturen zwischen 100 und 170 °C, bevorzugt zwischen 120 und 150 °C rührt und anschliessend das erhaltene Produkt wie üblich aufarbeitet.

Geeignete Katalysatoren sind z. B. Germanium- und Zirkoniumdioxid sowie solche der Formeln IV und V

$(R_4O)_4Ti$ (IV)

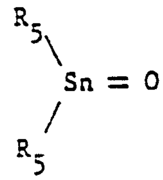 (V)

worin $R_4$ $C_1$-$C_{18}$-Alkyl, Phenyl oder Benzyl und $R_5$ $C_4$-$C_{12}$-Alkyl bedeuten.

Bevorzugt werden Dibutylzinnoxid und insbesondere Tetrabutyl-o-titanat und Tetraisopropyl-o-titanat.

$R_1$ und $R_2$ sind als $C_1$-$C_{18}$-Alkylen, bevorzugt $C_2$-$C_6$-Alkylen, z. B. Methylen, Dimethylen, Trimethylen, Tetramethylen, Hexamethylen, 2,2-Dimethyl-trimethylen, Octamethylen, Nonamethylen, Decamethylen, Dodecamethylen oder Octadecamethylen. Bevorzugt ist Ethylen. $R_1$ und $R_2$ sind vorzugsweise gleich.

Als durch —O—, —S— oder —N(R)— unterbrochenes $C_2$-$C_{18}$-Alkylen bedeuten $R_1$ und $R_2$ beispielsweise 2-Thiapropylen-1,3, 3-Thiapentylen-1,5, 4-Oxaheptamethylen-1,7, 3,6-Dioxaoctamethylen-1,8 oder 3,6-Diazaoctamethylen-1,8.

Bedeuten etwaige Substituenten $C_1$-$C_4$-Alkyl so handelt es sich um Methyl, Ethyl, n-Propyl, Isopropyl, n-Butyl, sec.-Butyl oder tert.-Butyl. $R_4$ bedeutet als $C_1$-$C_{18}$-Alkyl zusätzlich z. B. n-Pentyl, 2,2-Dimethylpropyl, n-Hexyl, 2,3-Dimethylbutyl, n-Octyl, 1,1,3,3-Tetramethylbutyl, Nonyl, Decyl, Dodecyl, Hexadecyl oder Octadecyl. $R_5$ bedeutet als $C_4$-$C_{12}$-Alkyl z. B. n-Butyl, n-Pentyl, n-Hexyl, n-Octyl, n-Decyl, n-Dodecyl. $R_4$ ist bevorzugt n-Butyl oder Isopropyl. $R_3$ ist bevorzugt Methyl oder Ethyl. $R_5$ ist bevorzugt n-Butyl oder n-Octyl.

Sind $R_1$ und $R_2$ $C_4$-$C_8$-Alkenylen, so handelt es sich z. B. um 2-Butenylen-1,4.

Die Katalysatoren werden in Mengen von mindestens 0,03, bevorzugt aber zwischen 0,05 und 1,0 Mol-% bezogen auf das Diol der Formel II eingesetzt.

Die Zahl n kann durch Variieren des Ueberschusses an Dicarbonsäureester der Formel III eingestellt werden.

Bevorzugtes Diol der Formel II ist das 1-(2-Hydroxyethyl)-2,2,6,6-tetramethyl-4-hydroxypiperidin.

Bevorzugter Dicarbonsäureester der Formel III ist Bernsteinsäuredimethylester.

Durch das erfindungsgemässe Verfahren wird auch eine deutlich bessere Raum/Zeit-Ausbeute gewährleistet.

Die Verbindungen der Formel I sind wertvolle Stabilisatoren für organische Materialien, die der Zersetzung unterworfen sind, vorzugsweise für synthetische Polymere.

Die folgenden Beispiele erläutern die Erfindung, ohne sie einzuschränken.

## Beispiel 1

In einem 10 l-Edelstahlreaktor werden 3 556 g 1-(2-Hydroxyethyl)-2,2,6,6-tetramethyl-4-hydroxypiperidin (17,7 Mol) und 2 839 g Bernsteinsäuredimethylester (19,4 Mol) unter Rühren und leichtem Stickstoffstrom auf 150 °C erwärmt. Nach 30 Minuten Rühren bei 150 °C werden der Schmelze 4 g Tetraisopropylorthotitanat (0,014 Mol) zugesetzt.

Das Reaktionsgemisch wird unter leichtem Stickstoffstrom bei einer Innentemperatur von 140 bis 150 °C 4 Stunden gerührt. In dieser Zeit destillieren 800 g Methanol ab.

Anschliessend wird bei 140 °C innerhalb von 30 Minuten über einen Vakuumregler Oelpumpenvakuum (< 1 mbar) angelegt. Nach 3 weiteren Stunden Rühren bei 140 °C wird die viskose Schmelze über das Bodenventil ausgetragen. Man erhält 4,8 kg eines amorphen, transparenten, fast farblosen Festprodukts mit einem Erweichungsbereich von 65 bis 80 °C (Koflerbank).

Das dampfdruckosmometrisch gemessene mittlere Molekulargewicht $\bar{M}n$ beträgt 3 150.

## Beispiel 2

In einem 10 l-Edelstahlreaktor werden 3 556 g 1-(2-Hydroxyethyl)-2,2,6,6-tetramethyl-4-hydroxypiperidin (17,7 Mol) und 2 968 g Bernsteinsäuredimethylester (20,3 Mol) unter Rühren und leichtem Stickstoffstrom auf 150 °C erwärmt. Nach 30 Minuten Rühren bei 150 °C werden der Schmelze 4 g

Tetraisopropylorthotitanat (0,014 Mol) zugesetzt. Das Reaktionsgemisch wird unter leichtem Stickstoffstrom bei einer Innentemperatur von 140 bis 150 °C 4 Stunden gerührt. In dieser Zeit destillieren 820 g Methanol ab. Anschliessend wird innerhalb von 30 Minuten über einen Vakuumregler Oelpumpenvakuum (< 1 mbar) angelegt und die Temperatur auf 160 bis 170 °C gesteigert. Nach 5 Stunden Rühren bei 160 bis 170 °C wird die viskose Schmelze über das Bodenventil ausgetragen. Man erhält 4,7 kg eines amorphen, transparenten, fast farblosen Festproduktes mit einem Erweichungsbereich von 95 bis 105 °C (Koflerbank). Das dampfdruckosmometrisch gemessene mittlere Molekulargewicht $\bar{M}n$ beträgt 5 800.

Beispiel 3

In einem 10 l-Edelstahlreaktor werden 3 556 g 1-(2-Hydroxyethyl)-2,2,6,6-tetramethyl-4-hydroxypiperidin (17,7 Mol) und 2 839 g Bernsteinsäuredimethylester (19,4 Mol) unter Rühren und leichtem Stickstoffstrom auf 150 °C erwärmt. Nach 30 Minuten Rühren bei 150 °C werden der Schmelze 5,3 g Dibutylzinnoxid (0,021 Mol) zugesetzt. Das Reaktionsgemisch wird unter leichtem Stickstoffstrom bei einer Innentemperatur von 140 bis 150 °C 6 Stunden gerührt. In dieser Zeit destillieren 800 g Methanol ab. Anschliessend wird bei 140 °C innerhalb von 30 Minuten über einen Vakuumregler Oelpumpenvakuum (< 1 mbar) angelegt. Nach 7 weiteren Stunden Rühren bei 140 °C wird die viskose Schmelze über das Bodenventil ausgetragen. Man erhält 4,8 kg eines amorphen, transparenten, fast farblosen Festproduktes mit einem Erweichungsbereich von 75 bis 85 °C (Koflerbank). Das dampfdruckosmometrisch gemessene mittlere Molekulargewicht $\bar{M}n$ beträgt 3 100.

Beispiel 4

In einem 10 l-Edelstahlreaktor werden 3 556 g 1-(2-Hydroxyethyl)-2,2,6,6-tetramethyl-4-hydroxypiperidin (17,7 Mol) und 2 839 g Bernsteinsäuredimethylester (19,4 Mol) unter Rühren und leichtem Stickstoffstrom auf 150 °C erwärmt. Nach 30 Minuten Rühren bei 150 °C werden der Schmelze 5,9 g Tetraisopropylorthotitanat (0,021 Mol) zugesetzt. Das Reaktionsgemisch wird unter leichtem Stickstoffstrom bei einer Innentemperatur von 140 bis 150 °C 2,5 Stunden gerührt. In dieser Zeit destillieren 810 g Methanol ab. Anschliessend wird innerhalb von 30 Minuten über einen Vakuumregler Oelpumpenvakuum (< 1 mbar) angelegt. Nach 2 Stunden Rühren bei 140 °C wird die viskose Schmelze über das Bodenventil ausgetragen. Man erhält 4,8 kg eines amorphen, transparenten, fast farblosen Festproduktes mit einem Erweichungsbereich von 75 bis 85 °C (Koflerbank). Das dampfdruckosmometrisch gemessene mittlere Molekulargewicht $\bar{M}n$ beträgt 3 200.

Beispiel 5

In einem 10 l-Edelstahlreaktor werden 3 556 g 1-(2-Hydroxyethyl)-2,2,6,6-tetramethyl-4-hydroxypiperidin (17,7 Mol) und 2 839 g Bernsteinsäuredimethylester (19,4 Mol) unter Rühren und leichtem Stickstoffstrom auf 150 °C erwärmt. Nach 30 Minuten Rühren bei 150 °C werden der Schmelze 4 g Tetraisopropylorthotitanat (0,014 Mol) zugesetzt. Das Reaktionsgemisch wird unter leichtem Stickstoffstrom bei einer Innentemperatur von 140-150 °C 4,5 Stunden gerührt. In dieser Zeit destillieren 810 g Methanol ab. Anschliessend wird innerhalb von 30 Minuten über einen Vakuumregler ein Vakuum von 5 mbar angelegt. Nach 4 Stunden Rühren bei 140 °C wird die viskose Schmelze über das Bodenventil ausgetragen. Man erhält 4,7 kg eines amorphen, transparenten, fast farblosen Festproduktes mit einem Erweichungsbereich von 70 bis 80 °C (Koflerbank). Das dampfdruckosmometrisch gemessene mittlere Molekulargewicht $\bar{M}n$ beträgt 3 300.

Beispiel 6

In einem 10 l-Edelstahlreaktor werden 3 556 g 1-(2-Hydroxyethyl)-2,2,6,6-tetramethyl-4-hydroxypiperidin (17,7 Mol) und 2 839 g Bernsteinsäuredimethylester (19,4 Mol) unter Rühren und leichtem Stickstoffstrom auf 150 °C erwärmt. Nach 30 Minuten Rühren bei 150 °C werden der Schmelze 4 g Tetraisopropylorthotitanat (0,014 Mol) zugesetzt. Das Reaktionsgemisch wird unter leichtem Stickstoffstrom bei einer Innentemperatur von 140 bis 150 °C 4 Stunden gerührt. In dieser Zeit destillieren 820 g Methanol ab. Anschliessend wird innerhalb von 30 Minuten über einen Vakuumregler Oelpumpenvakuum (< 1 mbar) angelegt. Nach 2,5 Stunden Rühren bei 150 °C wird die viskose Schmelze über das Bodenventil ausgetragen.

Man erhält 4,8 kg eines amorphen, transparenten, fast farblosen Festproduktes mit einem Erweichungsbereich von 75 bis 85 °C (Koflerbank). Das dampfdruckosmometrisch gemessene mittlere Molekulargewicht $\bar{M}n$ beträgt 3 300.

**Patentansprüche**

1. Verfahren zur Herstellung von Verbindungen der Formel I

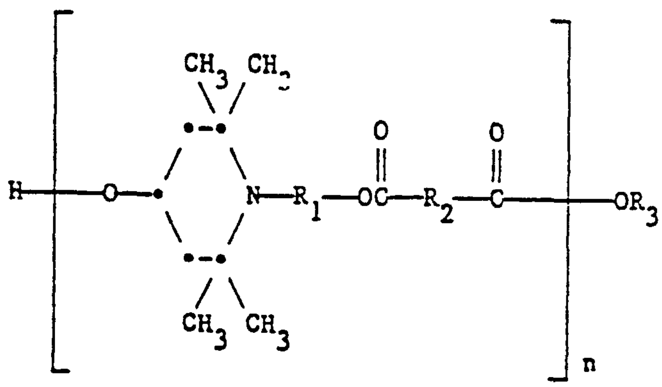

(I)

worin n eine Zahl zwischen 8 und 25, bevorzugt zwischen 10 und 20 bedeutet, $R_1$ und $R_2$ unabhängig voneinander $C_1$-$C_{18}$-Alkylen, durch —O—, —S— oder —N(R)— unterbrochenes $C_2$-$C_{18}$-Alkylen, wobei R Wasserstoff oder $C_1$-$C_4$-Alkyl bedeutet, $C_4$-$C_8$-Alkenylen sind und $R_3$ $C_1$-$C_4$-Alkyl bedeutet, durch Polykondensation eines Diols der Formel II

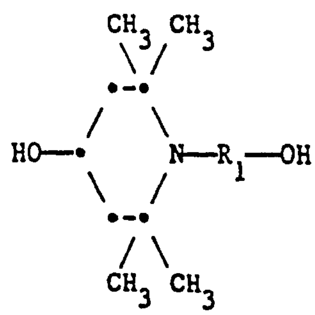

(II)

mit einem Dicarbonsäureester der Formel III

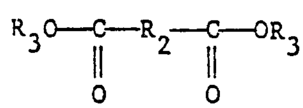

(III)

dadurch gekennzeichnet, dass man die Schmelze, in welcher der Dicarbonsäureester der Formel III in einem Ueberschuss von 2 bis 50 Mol-% bezogen auf das Diol der Formel II enthalten ist, in Gegenwart von mindestens 0,03 Mol-% eines Oxids oder einer metallorganischen Verbindung eines Metalls der vierten Haupt- oder der vierten Nebengruppe des Periodensystems, solange bis der grösste Teil des sich bildenden Alkanols der Formel $R_3OH$ abdestilliert ist bei einem Druck von 0,7 bis 1,3 bar und danach bei weniger als 10 mbar bei Temperaturen zwischen 100 und 170 °C rührt und anschliessend das erhaltene Produkt wie üblich aufarbeitet.

2. Verfahren gemäss Anspruch 1 zur Herstellung von Verbindungen der Formel I, worin n eine Zahl zwischen 10 und 20, $R_1$ und $R_2$ Ethylen und $R_3$ Methyl oder Ethyl bedeuten, durch Umsetzung von 1-(2-Hydroxyethyl)-2,2,6,6-tetramethyl-4-hydroxypiperidin mit einem 5 bis 20 Mol-%igen Ueberschuss an Bernsteinsäuremethyl- oder -ethylester, bezogen auf das Diol.

3. Verfahren gemäss Anspruch 1, dadurch gekennzeichnet, dass man die Schmelze, solange bis 70 bis 80 % des sich bildenden Alkanols der Formel $R_3OH$ abdestilliert ist, bei einem Druck von 0,9 bis 1,1 bar und danach bei weniger als 5 mbar bei Temperaturen zwischen 120 und 150 °C rührt.

4. Verfahren gemäss Anspruch 1, dadurch gekennzeichnet, dass der Katalysator in einer Menge zwischen 0,05 und 1,0 Mol-% bezogen auf das Diol der Formel II eingesetzt wird.

5. Verfahren gemäss Anspruch 4, dadurch gekennzeichnet, dass als Katalysator Tetrabutyl-o-titanat oder Tetraisopropyl-o-titanat eingesetzt wird.

**Claims**

1. A process for the preparation of a compound of the formula I

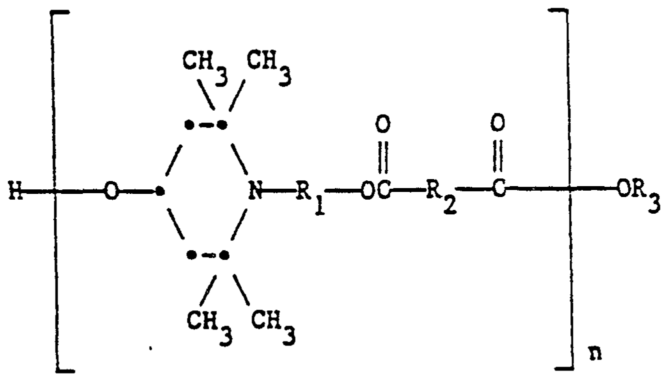

(I)

wherein n is a value from 8 to 25, preferably from 10 to 20, $R_1$ and $R_2$, each independently of the other, are $C_1$-$C_{18}$-alkylene, $C_2$-$C_{18}$-alkylene which is interrupted by —O—, —S— or —N(R)—, in which R is hydrogen or $C_1$-$C_4$-alkyl, or are $C_4$-$C_8$-alkenylene, and $R_3$ is $C_1$-$C_4$-alkyl, by polycondensation of a diol of the formula II

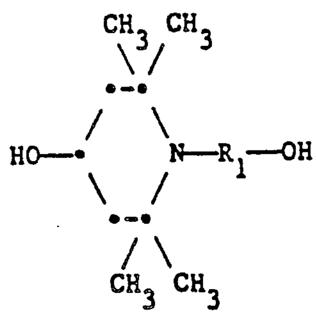

(II)

with a dicarboxylic acid ester of the formula III

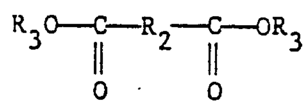

(III)

which process comprises stirring the melt which contains an excess of 2 to 50 mol. %, based on the diol of the formula II, of the dicarboxylic acid ester of the formula III, in the presence of at least 0.03 mol. %, of an oxide or of an organometal compound of a metal of the 4th main group or of the 4th auxiliary group of the Periodic Table, until the bulk of the alkanol of the formula $R_3OH$ which forms during the reaction is distilled off, under a pressure of 0.7 to 1.3 bar, and thereafter stirring under a pressure of less than 10 mbar, in the temperature range from 100° to 170 °C, and then working up the product so obtained in conventional manner.

2. A process according to claim 1 for the preparation of a compound of the formula I, wherein n is a value from 10 to 20, $R_1$ and $R_2$ are ethylene and $R_3$ is methyl or ethyl, which comprises reacting 1-(2-hydroxyethyl)-2,2,6,6-tetramethyl-4-hydroxypiperidine with a 5 to 20 mol. % excess of methyl or ethyl succinate, based on the diol.

3. A process according to claim 1, which comprises stirring the melt under a pressure of 0.9 to 1.1 bar until 70 to 80 % of the alkanol of the formula $R_3OH$ formed during the reaction is distilled off, and thereafter stirring under a pressure of less than 5 mbar in the temperature range from 120° to 150 °C.

4. A process according to claim 1, wherein the catalyst is used in an amount from 0.05 to 1.0 mol. %, based on the diol of the formula II.

5. A process according to claim 4, wherein tetrabutyl orthotitanate or tetraisopropyl orthotitanate is used as catalyst.

**Revendications**

1. Procédé pour préparer des composés répondant à la formule I :

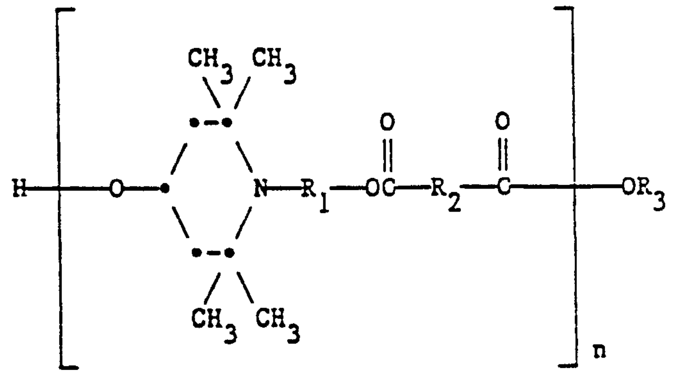

(I)

dans laquelle n désigne un nombre compris entre 8 et 25, de préférence entre 10 et 20, $R_1$ et $R_2$ représentent chacun, indépendamment l'un de l'autre, un radical alkylène contenant de 1 à 18 atomes de carbone, un radical alkylène en $C_2$-$C_{18}$ interrompu par —O—, —S— ou —N(R)— (dans ce dernier radical le symbole R désigne l'hydrogène ou un alkyle en $C_1$-$C_4$) ou un radical alcénylène en $C_4$-$C_8$, et $R_3$ représente un radical alkyle en $C_1$-$C_4$, par polycondensation d'un diol de formule II :

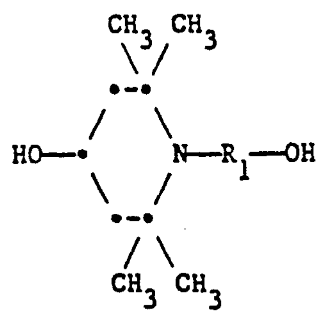

(II)

avec un ester d'acide dicarboxylique de formule III :

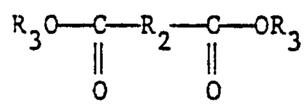

(III)

procédé caractérisé en ce qu'on agite à des températures comprises entre 100 et 170 °C sous une pression de 0,7 à 1,3 bar, puis sous une pression inférieure à 10 mbar, le mélange fondu dans lequel l'ester d'acide dicarboxylique de formule III se trouve en un excès de 2 à 50 % en moles par rapport au diol de formule II, en présence d'au moins 0,03 % en moles d'un oxyde ou d'un composé organométallique d'un métal du quatrième groupe principal ou du quatrième groupe secondaire de la classification périodique, jusqu'à ce que la majeure partie de l'alcanol de formule $R_3OH$ formé se soit échappée par distillation, après quoi on soumet le produit obtenu à un traitement complémentaire usuel.

2. Procédé selon la revendication 1 pour la préparation de composés de formule I dans lesquels n désigne un nombre compris entre 10 et 20, $R_1$ et $R_2$ représentent chacun un radical éthylène, et $R_3$ représente un radical méthyle ou éthyle, par réaction de l'(hydroxy-2 éthyl)-1 tétraméthyl-2,2,6,6 hydroxy-4 pipéridine avec un excès de 5 à 20 % en moles, par rapport au diol, de succinate de méthyle ou d'éthyle.

3. Procédé selon la revendication 1 caractérisé en ce qu'on agite le mélange fondu à des températures comprises entre 120 et 150 °C, sous une pression de 0,9 à 1,1 bar, puis sous une pression inférieure à 5 mbar, jusqu'à ce qu'il se soit échappé, par distillation, de 70 à 80 % de l'alcanol de formule $R_3OH$ formé.

4. Procédé selon la revendication 1 caractérisé en ce que le catalyseur est mis en jeu en une quantité comprise entre 0,05 et 1,0 % en moles, par rapport au diol de formule II.

5. Procédé selon la revendication 4 caractérisé en ce qu'on utilise, comme catalyseur, l'orthotitanate de tétrabutyle ou l'orthotitanate de tétra-isopropyle.